(19) Europäisches Patentamt
European Patent Office
Office européen des brevets

(11) EP 2 416 941 B1

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(51) Int Cl.:
*B29C 65/08* *(2006.01)*    *B65B 51/22* *(2006.01)*
*B65B 51/30* *(2006.01)*    *B65B 9/08* *(2012.01)*

(21) Anmeldenummer: **10705999.0**

(22) Anmeldetag: **26.02.2010**

(86) Internationale Anmeldenummer:
**PCT/EP2010/052486**

(87) Internationale Veröffentlichungsnummer:
**WO 2010/115661 (14.10.2010 Gazette 2010/41)**

(54) **VORRICHTUNG UND VERFAHREN ZUM BEARBEITEN EINES PACKSTOFFS MITTELS ULTRASCHALL**

DEVICE AND METHOD FOR PROCESSING A PACKING MATERIAL USING ULTRASOUND

DISPOSITIF ET PROCÉDÉ POUR TRAITER UN MATÉRIAU D'EMBALLAGE PAR ULTRASONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.04.2009 DE 102009002296**

(43) Veröffentlichungstag der Anmeldung:
**15.02.2012 Patentblatt 2012/07**

(73) Patentinhaber: **Robert Bosch GmbH**
**70442 Stuttgart (DE)**

(72) Erfinder:
• **IPPERS, Juergen**
**47929 Grefrath (DE)**
• **WIEDUWILT, Ulrich**
**73529 Schwaebisch Gmuend (DE)**

(56) Entgegenhaltungen:
**US-A- 4 517 790      US-A1- 2006 144 904**
**US-A1- 2007 251 643      US-B1- 6 547 903**

**Beschreibung**

Stand der Technik

Offenbarung der Erfindung

Die Erfindung geht aus von einer Vorrichtung und einem Verfahren zum Bearbeiten eines Packstoffs mittels Ultraschall nach der Gattung der unabhängigen Ansprüche. Aus der DE 197 537 40 C1 ist eine Vorrichtung zum Bearbeiten einer Materialbahn mit einer Ultraschalleinheit bekannt, die eine Sonotrode und ein Gegenwerkzeug aufweist. Die Materialbahn wird durch einen Spalt zwischen Sonotrode und Gegenwerk geführt, wobei die Sonotrode in einem Schlitten eingespannt ist und über eine Verstelleinrichtung bezüglich des Gegenwerkzeugs verstellbar ist. Über einen Kraftsensor wird die Kraft gemessen, mit der die Sonotrode in Richtung des Gegenwerkzeugs beaufschlagt ist. Durch die so ermittelte Anpresskraft der Sonotrode kann über eine Steuereinrichtung die Sonotrode auf das Gegenwerkzeug zu oder von ihm weg bewegt werden. Die optimale Anpresskraft wird zuvor in Versuchen ermittelt und als Sollwert in der Steuer- oder Regeleinrichtung abgespeichert.

Aus der US 6,547,903 B1 ist eine Vorrichtung und ein Verfahren zur Ultraschallbearbeitung bekannt, die einen rotierenden Amboss und eine Sonotrode umfasst, wobei sich ein bestimmter Abstand zwischen Sonotrode und Amboss automatisch beeinflussen lässt. Hierzu ist ein Sensor vorgesehen, der die Spaltkraft detektiert und daraus ein Steuersignal ableitet zur Anpassung des Spalts zwischen Sonotrode und Amboss.

Aus der US 2006/0144904 A1 ist bereits eine Ultraschallsiegelvorrichtung bekannt, die aus einer Sonotrode und einem Amboss besteht. Eine Steuerung des Spalts könnte erreicht werden durch Messung der Betriebsfrequenz der Sonotrode und anschließender Anpassung der Kraft bzw. des Drucks, der den Spalt beeinflusst.

Der Erfindung liegt die Aufgabe zugrunde, Vorrichtung und Verfahren anzugeben, bei der Einstellungen und Regelungen des Siegelspalts weiter verbessert wird und eine gleichbleibende Qualität der Siegelnaht erreicht wird. Diese Aufgabe wird gelöst durch die Merkmale er unabhängigen Ansprüche.

Vorteile der Erfindung

Erfindungsgemäße Vorrichtung und Verfahren haben demgegenüber den Vorteil, dass selbst bei Temperaturschwankungen sicher ein gleichmäßiger Abstand der Siegelwalzen zueinander eingehalten werden kann. Dies ermöglicht eine gleichbleibende Qualität der Siegelnaht. Die Regelung bzw. Steuerung des Siegelspalts erfolgt in Abhängigkeit von zumindest einer elektrischen Größe, die auf die Sonotrode einwirkt. Hierbei kann es sich um eine elektrische Ausgangsgröße eines Generators handeln, der hochfrequente elektrische Energie zur Generierung von mechanischen Ultraschallschwingungen einem Konverter zur Verfügung stellt, der wiederum die Sonotrode entsprechend beaufschlagt. Elektrische Größen lassen sich sehr einfach in eine Regel- bzw. Steuerung integrieren und sind oft ohnehin bereits vorhanden. So steht beispielsweise die Generatorleistung oder -energie in einer entsprechenden Generatorregelung zur Verfügung. Auf der anderen Seite kann eine gezielte Spannungsbeaufschlagung der Sonotrode - als weitere elektrische Größe - in besonders einfacher Weise Bestandteil einer Berührungserkennung sein.

Bei der Spaltmessung über eine elektrische Größe der Generatorregelung in Kombination mit einer Berührungserkennung kann auf einen zusätzlichen Temperatursensor zur weiteren Korrektur verzichtet werden. Auch separate Kraftsensoren sind nicht mehr notwendig. Die Berührungserkennung sieht vor, an die obere und untere Siegelwalze eine Spannung anzulegen, wobei es kurz vor dem Berühren zu einem elektrischen Durchschlag kommen würde. Damit kann die unmittelbar bevorstehende Berührung der Siegelwalzen an eines elektrischen Stromflusses ermittelt werden und eignet sich somit insbesondere für einen Bereich, für den die Spaltmessung über die elektrische Größe der Generatorregelung nicht sonderlich gut geeignet ist. Damit werden alle Spaltgrößen sicher erkannt. Auch der Stromfluss bei Berührung lässt sich besonders leicht erkennen und in die Regelung bzw. Steuerung des Spalts integrieren.

In einer zweckmäßigen Weiterbildung wird die Regelung bzw. Steuerung initialisiert, in dem ein paralleles Verfahren zumindest einer der Siegelwalzen bis zum Kontakt erfolgt. Abschließend wird lediglich eine Seite bis zum Kontakt abgesenkt, daraufhin die andere. Durch wird sichergestellt, dass die Siegelwalzen parallel zueinander stehen. Dieses Verfahren kann automatisch ablaufen.

Weitere zweckmäßige Weiterbildungen ergeben sich aus weiteren abhängigen Ansprüchen und aus der Beschreibung.

Zeichnung

Ausführungsbeispiele von Vorrichtung und Verfahren zum Bearbeiten eines Packstoffs mittels Ultraschall sind in der Zeichnung dargestellt und werden nachfolgend näher beschrieben.

Es zeigen:

Figur 1 eine perspektivische Vorderansicht der Vorrichtung zum Bearbeiten eines Packstoffs,

die Figur 2 die Rückansicht der Vorrichtung nach Figur 1,

die Figur 3 eine Seitenansicht eines Kopplungsmittels,

die Figur 4 eine Seitenansicht eines weiteren alternativen Kopplungsmittels,

die Figur 5 eine perspektivische Darstellung eines weiteren Ausführungsbeispiels der Vorrichtung zum Bearbeiten eines Packstoffs erweitert um eine Verstelleinrichtung,

die Figur 6 eine Seitenansicht einer ersten Verstelleinrichtung,

die Figur 7 die Seitenansicht einer zweiten Verstelleinrichtung,

die Figur 8 die Seitenansicht einer dritten Verstelleinrichtung,

die Figur 9 ein Ablaufschema der Initialisierung,

die Figur 10 ein Ablaufschema für die Spaltregelung sowie

die Figur 11 ein Blockschaltbild der Regelstruktur.

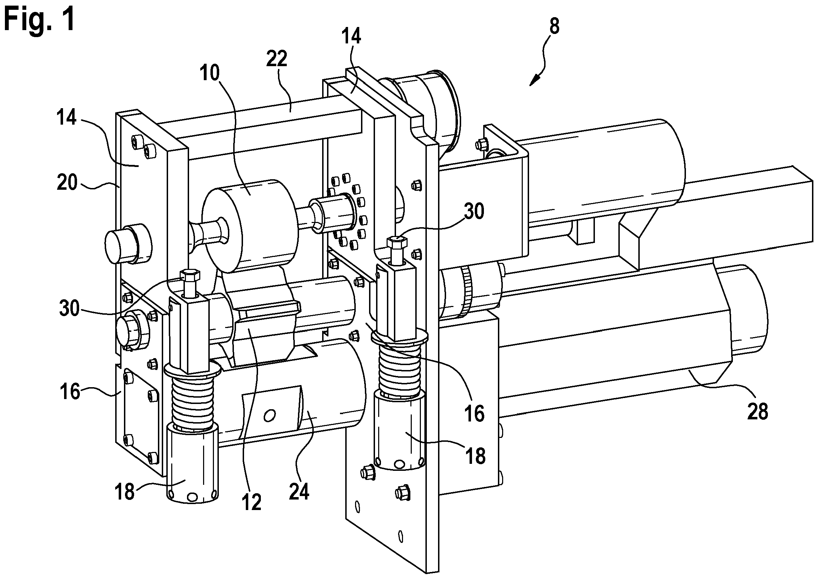

Bei der Vorrichtung gemäß Figur 1 wird eine Sonotrode 10 auf beiden Seiten von jeweils einem Lagerschild 14 drehbar gelagert geführt. Die beiden Lagerschilde 14 für die Sonotrode 10 sind an der Oberseite der Vorrichtung 8 durch ein oberes Trägermittel 22, hier beispielhaft als Trägerstab ausgeführt, seitlich miteinander verbunden. Mit der Sonotrode 10 wirkt ein ebenfalls rotierend gelagerter Amboss 12 zusammen. Der Amboss 12 ist in zwei Lagerschilden 16 gelagert. Das Lagerschild 14 der Sonotrode 10 ist mit dem jeweils darunter angeordneten Lagerschild 16 des Amboss 12 durch ein Kopplungsmittel 20 verbunden. Die beiden Lagerschilde 16 des Amboss 12 wiederum sind mit einem unteren Trägermittel 24 seitlich miteinander verbunden, welches beispielhaft als Trägerrohr ausgebildet ist. Auf der bezogen auf die Rotationsachsen von Sonotrode 10 bzw. Amboss 12 gegenüberliegenden Seite der Kopplungsmittel 20 sind jeweils Kraftmittel 18 angeordnet, über die die notwendige Siegelkraft auf die Siegelfläche von Sonotrode 10 und Amboss 12 aufgebracht werden kann. Oberhalb der Kraftmittel 18 sind jeweils Einstellmittel 30 vorgesehen. Dadurch lassen sich Siegelkraft bzw. Siegelspalt s justieren.

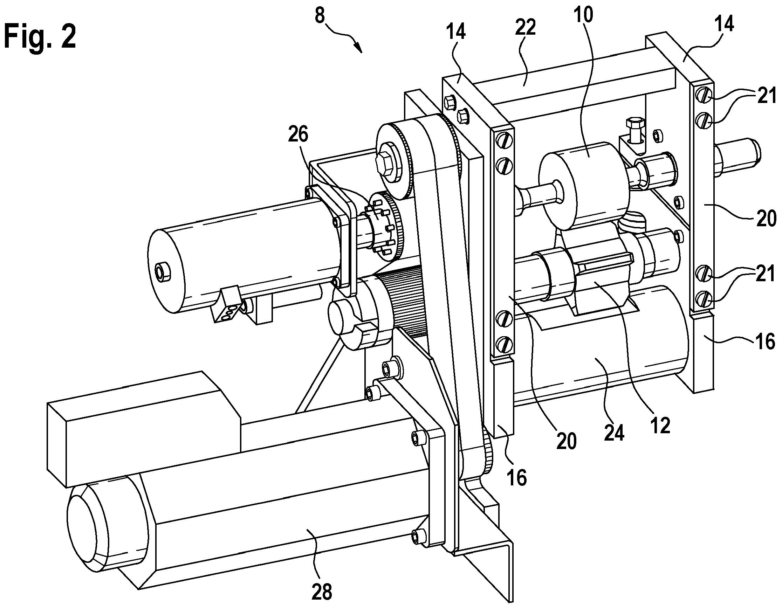

Bei der in Figur 2 gezeigten Rückansicht der in Figur 1 beschriebenen Vorrichtung 8 wird deutlich, dass das Lagerschild 14 der Sonotrode 10 jeweils mit dem darunter angeordneten Lagerschild 16 des Amboss 12 über das Kopplungsmittel 20, welches beispielhaft als Biegebalken ausgeführt ist, miteinander verbunden sind. Das Kopplungsmittel 20 ist am oberen Ende mit zwei Befestigungselementen 21 stirnseitig mit dem Lagerschild 14, am unteren Ende mit zwei Befestigungselementen 21 mit dem Lagerschild 16 verbunden. Dabei ist ein Spalt zwischen der Unterkante des Lagerschilds 14 der Sonotrode 10 und der Oberkante des Lagerschilds 16 des Amboss 12 vorgesehen, der lediglich durch die Kopplungsmittel 20 überbrückt wird. Weiterhin ist ein Antrieb 28 vorgesehen, der über ein Antriebselement 26 sowohl die Sonotrode 10 wie auch den Amboss 12 gegenläufig antreibt.

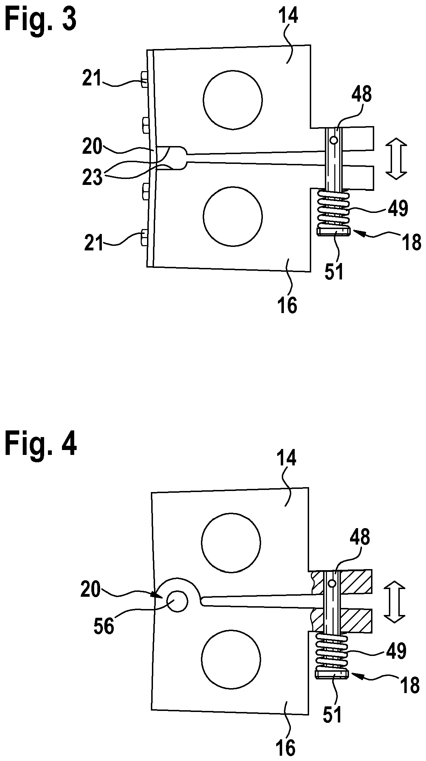

Bei der Ansicht gemäß Figur 3 sind die Lageraufnahmen für die rotierende Sonotrode 10 und den rotierenden Amboss 12 als runde Öffnungen zu sehen. Das Lagerschild 14 der Sonotrode 10 ist mit dem Lagerschild 16 des Amboss 12 auf der einen Seite durch das als Biegebalken ausgeführte Kopplungsmittel 20 verbunden. Auf der gegenüberliegenden Seite beaufschlagt das Kraftmittel 18 über das als Gelenk wirkende Kopplungsmittel 20 die Lagerschilde 14, 16 mit einer Kraft zueinander. In Richtung zum Kopplungsmittel 20 hin weisen die Lagerschilde 14, 16 jeweils Ausnehmungen 23 auf. Die gewünschte Biegefähigkeit des Biegestabs 20 lässt sich durch die so entstehende Biegelänge beeinflussen. Bei der gezeigten Anordnung wirkt der Biegebalken als Drehpunkt, über den sich der Abstand zwischen Sonotrode 10 und Amboss 12 variieren lässt. Die Ausführung des Kopplungsmittels 20 als Biegebalken bietet eine relative starre, aber dennoch gelenkige Verbindung zwischen den beiden Lagerschilden 14, 16. Die Verwendung eines Biegestabs als Kopplungsmittel 20 wirkt auch im Falle eines Crashs als Überlastschutz. So lässt der Biegebalken 20 ein definiertes Öffnen und Verbiegen des Siegelspaltes s zwischen Sonotrode 14 und Amboss 16 auch für den Fall zu, dass sich beispielsweise ein Produkt oder ein Fremdkörper zwischen Sonotrode 10 und Amboss 12 verklemmen sollte.

Je nach Einstellung lässt sich der Spalt s zwischen Sonotrode 10 und Amboss 12 variieren. Das Kraftmittel 18 bewirkt, dass oberes und unteres Lagerschild 14, 16 um den Drehpunkt 56 aufeinander zu bewegt würden und so eine Kraft auf die Siegelflächen aufbringen. Hierzu ist ein Stößel 48 auf der einen Seite mit dem Lagerschild 14 der Sonotrode 10 verbunden, so dass eine Bewegung des Stößels 48 auch eine Bewegung des Lagerschilds 14 bewirkt. Der Stößel 48 wird durch eine Öffnung im Lagerschild 16 des Amboss 12 bewegbar zum Lagerschild 16 durchgeführt und läuft in einem Flansch 51 aus. Der Flansch 51 dient als Auflagefläche für eine Feder 49, die sich auf der anderen Seite gegenüber der Unterseite des Lagerschilds 16 des Amboss 12 abstützt. Die Feder 49 ist als Spiralfeder ausgeführt und umgibt den Stößel 48. Das Kraftmittel 18 ist vorzugsweise justierbar ausgeführt. Hierzu könnte beispielsweise das Einstellmittel 30 in Form einer Schraube die Vorspannung der Feder 49 und damit letztlich die Siegelkraft verändern.

Bei dem Ausführungsbeispiel gemäß Figur 4 ist als Kopplungsmittel 20 eine Buchsen-Bolzenverbindung vorgesehen, die eine Drehbewegung der beiden Lagerschilde 14, 16 zueinander um einen Drehpunkt 56 ermöglicht. Wesentlich ist jedoch, dass das Kopplungsmittel 20 eine Relativbewegung zwischen dem Lagerschild 14 der Sonotrode 10 und dem Lagerschild 16 des Amboss 12 in der Weise zulässt, dass sich Sonotrode 10 und Amboss 16 relativ zueinander bewegen lassen, um die Einstellung eines Spalts s je nach Packstoff vorzusehen. Die Drehachse um den Drehpunkt 56 ist parallel zur Rotationsachse von Sonotrode 10 und Amboss 12.

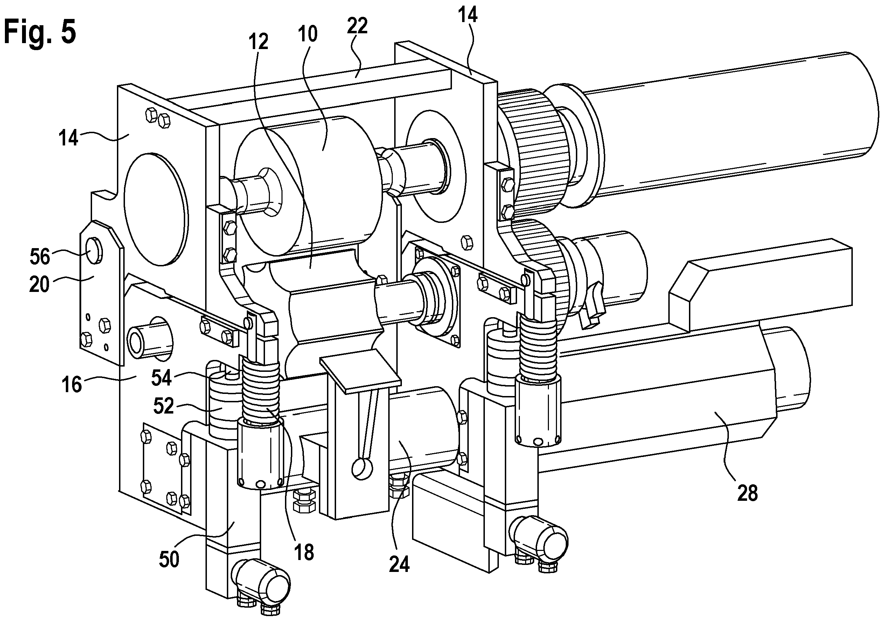

Das Ausführungsbeispiel gemäß Figur 5 unterscheidet sich von denjenigen der Figuren 1 und 2 im Wesentlichen darin, dass zusätzlich Verstellmittel 50 gezeigt sind. Die Verstellmittel 50 umfassen eine Kupplung 52 und einen Gewindebolzen 54 zur Spaltverstellung, indem das Lagerschild 14 der Sonotrode 10 relativ zu dem Lagerschild 16 des Amboss 12 verstellt wird. Außerdem ist bei dem Ausführungsbeispiel gemäß Figur 5 das Kopplungsmittel 20 seitlich angeordnet. Hierbei ist ein Bolzen mit dem Lagerschild 14 der Sonotrode 10 sowie eine entsprechend in den Bolzen greifende Buchse mit dem Lagerschild 16 des Amboss 12 im Drehpunkt 56 gekoppelt.

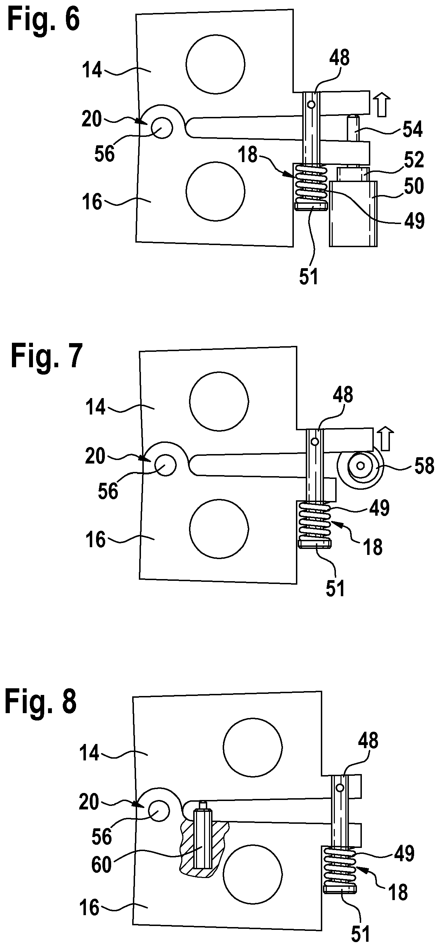

In den Ausführungsbeispielen gemäß den Figuren 6 bis 8 sind unterschiedliche Varianten der Verstellmöglichkeiten zwischen Lagerschild 14 der Sonotrode 10 und Lagerschild 16 des Amboss 12 gezeigt. Die Figur 6 entspricht der in Figur 5 dargestellten Variante, wo das Verstellmittel 50 über die Kupplung 52 und den Gewindebolzen 54 gegen die Unterkante des Lagerschilds 14 der Sonotrode 10 drückt und so eine Relativbewegung um den Drehpunkt 56 erzielt. Das Verstellmittel 50 ist relativ entfernt vom Drehpunkt 56 angeordnet. Als Verstelleinrichtung 50 ist beispielsweise ein Servomotor vorgesehen, der über den Gewindebolzen 54 eine translatorische Bewegung auf das Lagerschild 14 ausübt. Das untere Lagerschild 16 wird hier quasi als Basis fungieren und das obere Lagerschild 14 beim Herausdrehen des Gewindebolzens 54 über diesen nach oben drücken. Die Kraftmittel 18 sorgen außerdem dafür, dass das obere Lagerschild 14 immer an dem Gewindebolzen 54 anliegt und sich so auch beim Eindrehen des Gewindebolzens 54 nach unten bewegt. Dank des kontinuierlich von oben wirkenden Drucks macht sich das Gewindespiel nicht negativ bemerkbar. Der Einsatz jeweils eines Servomotors mit Gewindebolzen 54 im linken und rechten Lagerschild 14, 16 gibt die Möglichkeit, die Sonotrode 10 und den Amboss 12 automatisch zueinander parallel auszurichten. Bei dem Ausführungsbeispiel gemäß Figur 6 können sehr kleine wie auch größere Stellwege sehr genau erreicht werden.

Bei dem Ausführungsbeispiel gemäß Figur 7 lässt sich der Abstand über einen Exzenter 58 verändern, der parallel zur Rotationsachse von Sonotrode 10 und Amboss 12 drehbar gelagert ist. Wiederum bewirkt das Kraftmittel 18 eine Vorspannung zwischen den beiden Lagerschilden 14, 16. Die Drehbewegung eines Servomotors wird über die Exzenterscheibe 58 in eine translatorische Bewegung umgesetzt. Während die Exzenterscheibe 58 fest gelagert ist, werden die oberen Lagerschilde 14 über die Exzenterscheiben 58 angehoben bzw. abgesenkt.

Bei dem Ausführungsbeispiel gemäß Figur 8 ist ein Aktor 60 vorgesehen, der relativ nahe am Drehpunkt 56 angreift. Bei dem Aktor handelt es sich beispielsweise um einen Piezoaktor 60, der elektrische Energie in eine mechanische Wegänderung umwandelt. Piezoaktoren 60 sind deshalb so vorteilhaft, weil sie Bewegungen im Sub-Nanometerbereich durchführen können. Weiterhin sind Piezoaktoren 60 wartungs- und verschleißfrei. In dem statischen Betrieb benötigen sie keine Leistung. Außerdem können hohe Lasten bewegt werden.

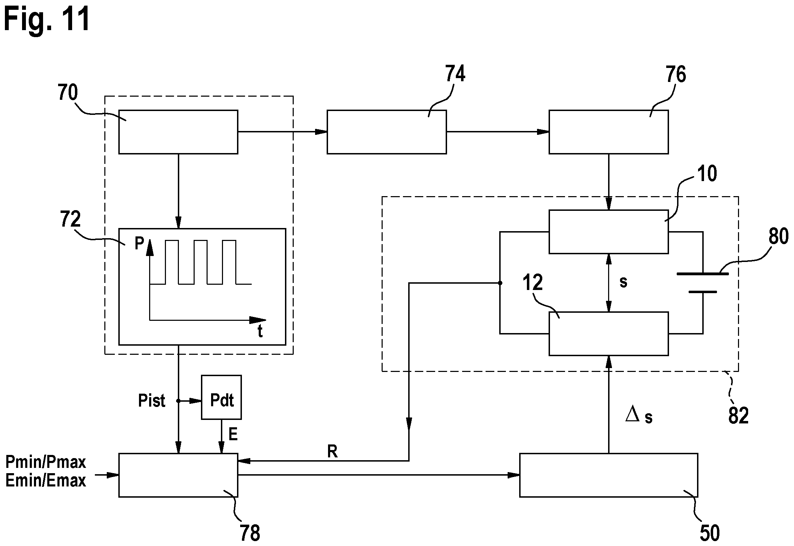

Von einem elektrischen Generator 70 wird die Eingangsspannung von 50 Hz, 220 V in hochfrequente elektrische Wechselspannung umgewandelt. Die meisten Systeme arbeiten mit 20, 30 oder 35 kHz. An diesem Generator 70 ist der Schallwandler (Konverter 74) angeschlossen, der wiederum die elektrische Energie in hochfrequente mechanische Schwingungen umwandelt. Mittels Amplitudentransformationsstück (Booster 76) werden die Amplituden verstärkt oder verringert. Die Amplitudenänderung verhält sich dabei umgekehrt proportional zur Querschnittsänderung des Boosters 76. Die hochfrequenten Schwingungen am Konverter 74 werden vom Booster 76 auf das Schweißwerkzeug, nämlich die Sonotrode 10 übertragen. Die Sonotrode 10 ist kraftschlüssig, leicht auswechselbar angeschraubt. Eine Möglichkeit, die Änderung des Spaltmaßes s zu bestimmen, besteht in der ohnehin vorhandenen Generatorregelung 72. Der Generator 70 enthält einen elektrischen Schwingkreis, in dem sich das Verhalten des mechanischen Schwingkreises direkt widerspiegelt. Solange der Schwingkreis, sowohl der mechanische als auch der elektrische, mit seiner Eigenfrequenz schwingt, muss ihm lediglich soviel Energie zugeführt werden wie durch Reibungsverlust im Material bzw. im Widerstand verloren gehen. Wird die Sonotrode 10 durch das Siegeln bzw. Schneiden in ihrer Eigenschwingung behindert, macht sich dies auch im elektrischen Schwingkreis bemerkbar. Die Energie, die dem System dadurch entzogen wird, ist proportional zur Schweißamplitude und -kraft und soweit auch zum Schweißspalts. Durch Parametereinstellung bei der Inbetriebnahme kann ein zulässiger Bereich für die Leistung P oder Energie E festgelegt werden (Pmin, Pmax; Emin, Emax), in dem eine qualitativ gute Schweißung erfolgt. Wird dieser Bereich verlassen, liefert die Generatorregelung 72 ein entsprechendes Signal an eine Regelung bzw. Steuerung 78, das Spaltmaß s entsprechend anzupassen. Entsprechend dieser Änderung Δs steuert die Regelung bzw. Steuerung 78 die Verstelleinrichtung 50 an, wodurch sich der Siegelspalt s in der gewünschten Weise verändert. Die Generatorregelung 72 erzeugt beispielhaft in Figur 11 dargestellten rechteckförmigen, zeitlichen Verlauf der Leistung P. Die Leistung P nimmt ihr Maximum zu den Zeitpunkten an, an den die Siegelflächen von Sonotrode 10 und Amboss 12 unmittelbar gegenüber stehen und eine Ultraschallsiegelung vorgenommen werden soll. Zur Erzielung des gewünschten Leistungsverlaufs erfasst die Generatorregelung 72 ständig die tatsächliche Leistung Pist des Generators 70.

Der Regelung bzw. Steuerung 78 ist außerdem ein Ausgangssignal R einer Berührungserkennung 82 zugeführt, anhand dessen eine unmittelbar bevorstehende Berührung von Sonotrode 10 und Amboss 12 erkannt wird. Hierzu wird über eine Spannungsquelle 80 eine vorzugsweise Niedervoltspannung an Sonotrode 10 und Amboss 12 angelegt. Erfolgt eine Berührung bzw. steht diese kurz bevor, wird der Stromkreis geschlossen, was anhand des Ausgangssignals R abgelesen werden kann. Die Regelung bzw. Steuerung 78 erhöht bei einer bevorstehenden Berührung den Siegelspalt s wie nachfolgend näher beschrieben.

Sowohl Sonotrode 10 als auch Amboss 12 rotieren gegenläufig und sind quasi als Siegelwalzen ausgeführt. Sie weisen mehrere Siegelflächen auf, in denen auch eine Schneidfunktion zur Abtrennung des Packstoffes integriert sein kann. Abhängig von der Art des Packstoffes muss mit hoher Genauigkeit ein Siegelspalt eingestellt werden. Als Siegelspalt bzw. Spalt s bezeichnet man den Abstand der Siegelfläche der Sonotrode 10 von der Siegelfläche des Amboss 12. Dieser Siegelspalt s wird durch beispielhaft in den Figuren 5 bis 8 dargestellte Verstellmittel wie Verstellantrieb 50, Exzenter 58 oder Aktor 60 in der gewünschten Größe verstellt. Sie wirken auf zumindest ein Lagerschild 14 relativ zum anderen Lagerschild 16 ein. Sollte sich im laufenden Betrieb die Größe des Spalts s verändern, können die Verstellmittel 50 diesen wieder auf die gewünschte Sollgröße bringen. Das beispielsweise als Feder ausgeführte Kraftmittel 18 am Ende der Lagerschilde 14, 16 dient dazu, die Lagerschilde 14, 16 zusammenzudrücken und die notwendige Siegel- beziehungsweise Schneidkraft aufzubringen. Außerdem wirken durch den Zahnriemenantrieb Kräfte auf die Sonotrode 10, die die oberen Lagerschilde 14 abheben würden, was das Kraftmittel 18 verhindert. Das Kraftmittel 18 könnte anstelle einer Feder auch pneumatisch oder hydraulisch ausgeführt sein. Die Kopplungsmittel 20 dienen der beweglichen Verbindung des Lagerschilds 14 der Sonotrode 10 mit dem Lagerschild 16 des Amboss. Neben den beschriebenen Varianten könnten auch Linearführungen wie beispielsweise Säulenführungen vorgesehen werden, die eine relative Linearbewegung der Lagerschilde 14, 16 zueinander zulassen.

Die Lagerschilde 14 bilden Seitenwangen, welche mit dem Trägermittel, nämlich dem Trägerstab 22, miteinander verbunden sind. Das Trägerrohr 24 könnte auch zur Stabilisierung und als Aufnahmemöglichkeit in der Verpackungsmaschine dienen. Die Antriebskopplung der oberen und unteren Siegelwalze (Sonotrode 10 und Amboss 12) erfolgt über Zahnriemen. Die Rotationsgeschwindigkeit der Siegelwalzen richtet sich nach der Bahngeschwindigkeit des zur siegelnden Packstoffschlauchs und kann z.B. ereignisgesteuert sein. Diese Dynamik wird mittels des Antriebs 28, beispielsweise ein Servomotor, erreicht, welcher die Kräfte und Momente mittels eines als Zahnriemen ausgeführten Antriebselements 26 überträgt. Die beschriebene Vorrichtung ermöglicht, die für den Fügevorgang mittels Ultraschall notwendigen Parameter wie beispielsweise Siegelspalt s, Siegelkraft und Siegelzeit sehr genau und anwendungsgerecht einzustellen. Die Einstellung der Siegelkraft lässt sich über die Kraftmittel 18 realisieren. Die Kraftmittel sind beispielsweise als Federn ausgeführt, so dass die Einstellung der Siegelkraft linear zur Federkennlinie möglich ist. Die Kraftmittel 18 wirken auf die beiden Lagerschilde 14, 16, so dass die Siegelkraft zwischen der oberen Siegelwalze, der Sonotrode 10, und der unteren Siegelwalze, dem Amboss 12, einzustellen ist.

Bei der Berührungserkennung 82 werden an obere und untere Siegelwalze, nämlich Sonotrode 10 und Amboss 12, eine Spannung von ungefähr 5 bis 10V angelegt. Kurz vor der metallischen Berührung von Sonotrode 10 und Amboss 12 schließt sich der Stromkreis, nämlich in Form eines elektrischen Durchschlags. Die Durchschlagfestigkeit liegt bei der genannten Spannung bei Luft und Atmosphärendruck, abhängig von Temperatur, Feuchtigkeit und dem Vorhandensein von Fremdkörper bei einem Abstand von 0,6 bis 1,0 $\mu$m. Kommt es durch die Erwärmung der von Sonotrode 10 und Amboss 12 zu einer Verringerung des Spaltmaßes s, würde das von der Regelung bzw. Steuerung 78 gelieferte Signal einen definierten Rückhub der oberen Siegelwalze, nämlich die Sonotrode 10, auslösen. Ein zu großer Spalt s lässt sich mit der Berührungserkennung 78 nicht erfassen.

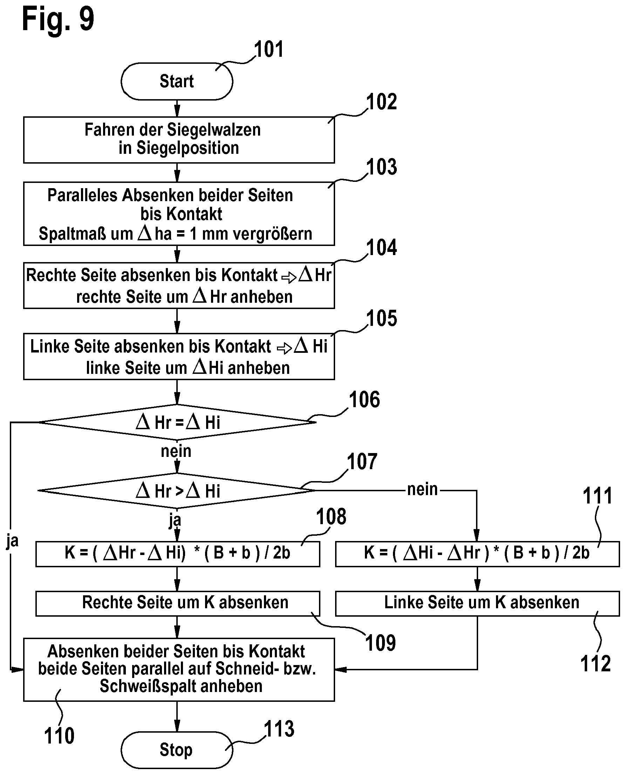

Nachfolgend wird anhand der Figur 9 die Initialisierung der Regelung bzw. Steuerung 78 näher beschrieben. Bei der Inbetriebnahme der Vorrichtung 8 zum Bearbeiten eines Packstoffes mittels Ultraschall muss sichergestellt werden, dass die Siegelwalzen, nämlich Sonotrode 10 und Amboss 12, parallel zueinander stehen. Nach dem Start der Initialisierung (Schritt 101) werden die Siegelwalzen 10,12 in die Siegelposition gebracht (Schritt 102). Hierzu sind die Siegelwalzen 10, 12 manuell so zueinander auszurichten, dass sich die Stollen der Sonotrode 10 und Amboss 12 gegenüberstehen. Diese Position wird in der Maschinensteuerung abgespeichert. Sonotrode 10 und Amboss 12 werden relativ zueinander so verfahren, dass sie in Kontakt zueinander gebracht werden, wobei nicht bekannt ist, auf welcher Seite der Kontakt entsteht. Hierzu werden beide Seiten parallel solange abgesenkt, bis ein Kontakt entsteht (Schritte 102, 103). Anschließend wird die Sonotrode 10 auf einen Anfangsspalt um $\Delta$ha angehoben. Ob sich Sonotrode 10 und Amboss 12 in Kontakt befinden, wird durch die Berührungserkennung 82 erkannt, da in diesem Fall ein Strom über die Siegelwalzen 10, 12 fließt. Danach wird zuerst die rechte (Schritt 104) und dann die linke Seite (Schritt 105) bis zum Kontakt abgesenkt und jeweils um die dabei registrierte Wegänderung $\Delta$Hr bzw. $\Delta$HI wieder angehoben. Sind Sonotrode 10 und Amboss 12 nicht parallel zueinander, lässt sich aus diesen beiden Wegänderungen ΔHr bzw. ΔHI, dem Lagerabstand B und der Walzenbreite b der Sonotrode 10 der Korrekturfaktur K berechnen (Schritte 108 bzw. 111):

$$K = (\Delta Hr - \Delta HI) * (B + b) / 2b) \text{ (Schritt 108)}$$

bzw.

$$K = (\Delta HI - \Delta Hr) * (B + b) / 2b) \text{ (Schritt 111)}.$$

Nach Absenken der höheren Seite um K (oder Anheben der niedrigeren Seite um K) sind Sonotrode 10 und Amboss 12 parallel. Im Schritt 110 werden beide Seiten wieder bis zum Kontakt abgesenkt und dann beide Seiten parallel auf den Schweißspalt s angehoben. Damit ist die Initialisierung abgeschlossen (Schritt 113).

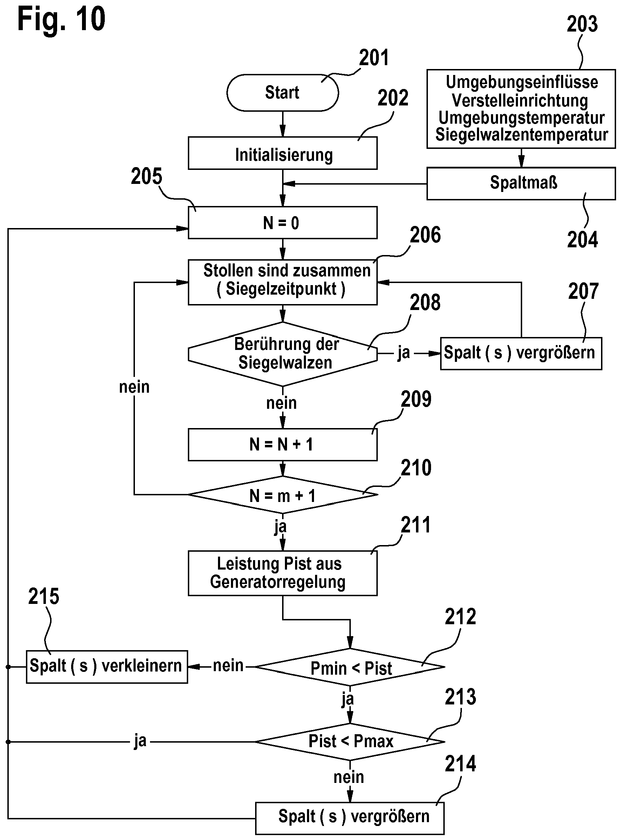

Nach der Initialisierung gemäß Figur 9 fahren die Siegelwalzen 10, 12 in die Startposition (die Siegelstollen berühren sich nicht, um den Packstoff einzufädeln und die Maschine zu starten). Die in der Regelung bzw. Steuerung 78 realisierte Spaltregelung ist nun in Figur 10 näher erläutert.

Nachdem der Siegelspalt s über die Initialisierung (Schritt 202 gemäß Vorgehensweise nach Figur 9) auf den vorgegebenen Siegelspalt s eingestellt wurde, kommt es im Laufe des Betriebs zu einer Erwärmung von Sonotrode 10 und Amboss 12 damit zu einer Verringerung des Spaltmaßes s. Der entsprechende Regelkreis zur Spaltregelung mit bereits beschriebener Spalterfassung und Spalteinstellung auf den geforderten Siegelspalt ist in Figur 10 abhängig von den Umgebungseinflüssen, der Verstelleinrichtung 50, der Umgebungstemperatur, der Siegelwalzentemperatur etc. dargestellt (vgl. Schritt 203). Aus den Umgebungseinflüssen ermittelt sich das gewünschte Spaltmaß (Schritt 204). Zum Siegelzeitpunkt wird der Spalt s erfasst (Schritt 206), nämlich wenn die Siegelflächen von Sonotrode 10 und Amboss 12 zusammenstehen. Zu diesem Zeitpunkt wird überprüft, ob sich Sonotrode 10 und Amboss 12 berühren (Schritt 208). Dies erfolgt mit Hilfe der Berührungserkennung 82. Sollte aufgrund eines Stromflusses auf eine Berührung von Sonotrode 10 und Amboss 12 geschlossen werden, so wird der Spalt s vergrößert (Schritt 207). Parallel läuft die Spalterfassung über die Generatorregelung 72. Dafür wird bei jedem m + 1 - ten (m ist gleich Anzahl der Siegelstollen) Eingriff der Siegelwalzen 10, 12 im Siegelzeitpunkt die Leistung Pist, die die Generatorregelung 72 liefert, mit der zulässigen Leistung Pmin, Pmax verglichen. Die zulässige Leistung, die innerhalb der Grenzen Pmin und Pmax liegt, wird durch die Parametereinstellung bei der Inbetriebnahme festgelegt und umfasst den Leistungsbereich Pmin bis Pmax, in dem eine qualitativ gute Schweißung erfolgt. Weicht die gemessene elektrische Leistung Pist nach oben vom zulässigen Bereich Pmax ab (Pist > Pmax), ist der Spalt zu eng ist (Abfrage 213) und der Spalt wird vergrößert (Schritt 214). Als Folge davon wird der Verstellantrieb 50 veranlasst, den Spalt s um wenige μm zu vergrößern. Ist die Leistung Pist kleiner als die zulässige Leistung Pmin (Pist < Pmin; Abfrage 212), so muss der Spalt verkleinert werden (Schritt 215). Alternativ könnten auch weitere geeignete elektrische Größen als Ausgangsgrößen des Generators 70 wie beispielsweise die Energie E (als Integral über die Leistung P) mit entsprechenden Grenzwerten Emax, Emin verglichen werden oder aber Strom, Spannung etc.

Unabhängig von der Generatorregelung 72 überwacht parallel die Berührungserkennung 82 den Abstand zwischen Sonotrode 10 und Amboss 12 (Schritt 208). Sobald sich der Stromkreis der Berührungserkennung 82 schließt, die Siegelwalzen 10, 12 sich also berühren, wird unabhängig von der Generatorregelung 72 ein Rückhub der oberen Walze, hier der Sonotrode 10, ausgelöst, so dass sich der Spalt s vergrößert (Schritt 207).

Die beschriebene Vorrichtung 8 eignet sich insbesondere für die Aufbringung einer Quersiegelnaht für Schlauchbeutel, ist jedoch hierauf nicht eingeschränkt. Solche Schlauchbeutelmaschinen können je nach zu verpackendem Produkt horizontal oder vertikal angeordnet sein.

## Patentansprüche

1. Vorrichtung zum Bearbeiten eines Packstoffes mittels Ultraschall, umfassend

   - zumindest eine Sonotrode (10),
   - zumindest einen Amboss (12), wobei zwischen Sonotrode (10) und Amboss (12) zum Zwecke der Ultraschallsiegelung eines Packstoffes ein Spalt (s) ausgebildet ist, durch den der Packstoff führbar ist,
   - zumindest ein Verstellmittel (50), das den Spalt (s) zwischen Sonotrode (10) und Amboss (12) verstellt,
   - zumindest ein Generator (70), der eine Eingangsspannung in eine geeignete Ausgangsspannung umwandelt, die ein Konverter (74) in mechanische Schwingungen umwandelt zur Erzeugung von Ultraschallschwingungen an der Sonotrode (10),

- wobei eine Regelung bzw. Steuerung (78) vorgesehen ist zur Regelung bzw. Steuerung des Spalts (s) zwischen Sonotrode (10) und Amboss (12) in Abhängigkeit von zumindest einer elektrischen Größe (P, E, R), die zumindest eine Ausgangsgröße (P, E) des Generators (70) ist und die auf die Sonotrode (10) einwirkt.

2. Vorrichtung nach einem der vorhergehenden Ansprüche, **dadurch gekennzeichnet, dass** das Verstellmittel (50) den Spalt (s) zwischen Sonotrode (10) und Amboss (12) verändert, wenn zumindest die Ausgangsgröße (P, E) des Generators (70) einen Grenzwert (Pmin, Pmax; Emin, Emax) über- oder unterschreitet.

3. Vorrichtung nach einem der vorhergehenden Ansprüche, **dadurch gekennzeichnet, dass** das Verstellmittel (50) den Spalt (s) zwischen Sonotrode (10) und Amboss (12) vergrößert, wenn die Ausgangsgröße (P, E) des Generators (70) einen Grenzwert (Pmax; Emax) übersteigt.

4. Vorrichtung nach einem der vorhergehenden Ansprüche, **dadurch gekennzeichnet, dass** als elektrische Größe zumindest eine elektrische Ausgangsgröße (R) einer Berührungserkennung (82) vorgesehen ist, die zur Erkennung einer bevorstehenden Berührung von Sonotrode (10) und Amboss (12) dient.

5. Vorrichtung nach einem der vorhergehenden Ansprüche, **dadurch gekennzeichnet, dass** zur Berührungserkennung (82) zwischen Sonotrode (10) und Amboss (12) eine elektrische Spannung (80) angelegt ist.

6. Vorrichtung nach einem der vorhergehenden Ansprüche, **dadurch gekennzeichnet, dass** die Berührungserkennung (82) auf eine bevorstehende Berührung von Sonotrode (10) und Amboss (12) erkennt, wenn ein Strom fließt zwischen Sonotrode (10) und Amboss (12).

7. Vorrichtung nach einem der vorhergehenden Ansprüche, **dadurch gekennzeichnet, dass** das Verstellmittel (50) den Spalt (s) zwischen Sonotrode (10) und Amboss (12) vergrößert, wenn die Berührungserkennung (82) auf eine bevorstehenden Berührung von Sonotrode (10) und Amboss (12) schließen lässt.

8. Vorrichtung nach einem vorhergehenden Ansprüche, **dadurch gekennzeichnet, dass** im Rahmen einer Initialisierung abhängig von dem Ausgangssignal der Berührungserkennung (82) das Verstellmittel (50) Sonotrode (10) bzw. Amboss (12) relativ zueinander verstellt, so dass diese parallel zueinander angeordnet sind.

9. Vorrichtung nach einem vorhergehenden Ansprüche, **dadurch gekennzeichnet, dass** im Rahmen einer Initialisierung abhängig von einer Wegänderung (ΔHr bzw. ΔHl) bis zu einer Berührung von Sonotrode (10) und Amboss (12) das Verstellmittel (50) Sonotrode (10) bzw. Amboss (12) relativ um einen Korrekturfaktor (K) zueinander verstellt.

10. Verfahren zum Bearbeiten eines Packstoffes mittels Ultraschall, wobei zwischen einer Sonotrode (10) und Amboss (12) zum Zwecke der Ultraschallsiegelung eines Packstoffes ein Spalt (s) ausgebildet wird, durch den der Packstoff geführt wird, wobei der Spalt (s) zwischen Sonotrode (10) und Amboss (12) verstellt werden kann, wobei eine Eingangsspannung in eine geeignete Ausgangsspannung umgewandelt wird, die in mechanische Schwingungen umgewandelt werden zur Erzeugung von Ultraschallschwingungen an der Sonotrode (10), wobei der Spalt (s) zwischen Sonotrode (10) und Amboss (12) in Abhängigkeit von zumindest einer elektrischen Größe (P, E, R) verändert wird, die auf die Sonotrode (10) einwirkt, wobei als elektrische Größe zumindest eine Ausgangsgröße (P, E) eines die Eingangsspannung in eine Ausgangsspannung umwandelnden Generators (70) verwendet wird.

11. Verfahren nach einem der vorhergehenden Verfahrensansprüche, **dadurch gekennzeichnet, dass** der Spalt (s) zwischen Sonotrode (10) und Amboss (12) verändert wird, wenn zumindest die Ausgangsgröße (P, E) des Generators (70) einen Grenzwert (Pmin, Pmax; Emin, Emax) über- oder unterschreitet.

12. Verfahren nach einem der vorhergehenden Verfahrensansprüche, **dadurch gekennzeichnet, dass** der Spalt (s) zwischen Sonotrode (10) und Amboss (12) vergrößert wird, wenn die Ausgangsgröße (P, E) des Generators (70) einen Grenzwert (Pmax; Emax) übersteigt.

13. Verfahren nach einem der vorhergehenden Verfahrensansprüche, **dadurch gekennzeichnet, dass** als elektrische Größe zumindest eine elektrische Ausgangsgröße (R) einer Berührungserkennung (82) verwendet wird, die zur Erkennung einer bevorstehenden Berührung von Sonotrode (10) und Amboss (12) dient.

14. Verfahren nach einem der vorhergehenden Verfahrensansprüche, **dadurch gekennzeichnet, dass** zur Berührungserkennung (82) zwischen Sonotrode (10) und Amboss (12) eine elektrische Spannung (80) angelegt wird.

15. Verfahren nach einem der vorhergehenden Verfahrensansprüche, **dadurch gekennzeichnet, dass** die Berührungserkennung (82) auf eine bevorstehende Berührung von Sonotrode (10) und Amboss (12) erkennt, wenn ein Strom fließt zwischen Sonotrode (10) und Amboss (12).

16. Verfahren nach einem der vorhergehenden Verfahrensansprüche, **dadurch gekennzeichnet, dass** der Spalt (s) zwischen Sonotrode (10) und Amboss (12) vergrößert wird, wenn die Berührungserkennung (82) auf eine bevorstehenden Berührung von Sonotrode (10) und Amboss (12) schließen lässt.

17. Verfahren nach einem der vorhergehenden Verfahrensansprüche, **dadurch gekennzeichnet, dass** im Rahmen einer Initialisierung abhängig von dem Ausgangssignal der Berührungserkennung (82) Sonotrode (10) bzw. Amboss (12) relativ zueinander verstellt wird, so dass diese parallel zueinander angeordnet sind.

18. Verfahren nach einem der vorhergehenden Verfahrensansprüche, **dadurch gekennzeichnet, dass** im Rahmen einer Initialisierung abhängig von einer Wegänderung (ΔHr bzw. ΔHl) bis zu einer Berührung von Sonotrode (10) und Amboss (12) Sonotrode (10) bzw. Amboss (12) relativ um einen Korrekturfaktor (K) zueinander verstellt wird.

**Claims**

1. Device for processing a packing material by means of ultrasound, comprising

   - at least one sonotrode (10),
   - at least one anvil (12), wherein for the purposes of ultrasound sealing of a packing material a gap (s) through which the packing material can be guided is formed between the sonotrode (10) and anvil (12),
   - at least one adjusting means (50) which adjusts the gap (s) between the sonotrode (10) and anvil (12),
   - at least one generator (70) which converts an input voltage into a suitable output voltage which is converted by a converter (74) into mechanical vibrations in order to generate ultrasound vibrations at the sonotrode (10),
   - wherein a regulator and/or controller (78) is provided for the regulation and/or control of the gap (s) between the sonotrode (10) and anvil (12) as a function of at least one electric variable (P, E, R) which is at least one output variable (P, E) of the generator (70) and which acts on the sonotrode (10).

2. Device according to one of the preceding claims, **characterized in that** the adjusting means (50) varies the gap (s) between the sonotrode (10) and anvil (12) if at least the output variable (P, E) of the generator (70) exceeds or undershoots a limit value (Pmin, Pmax; Emin, Emax).

3. Device according to one of the preceding claims, **characterized in that** the adjusting means (50) increases the gap (s) between the sonotrode (10) and anvil (12) if the output variable (P, E) of the generator (70) exceeds a limit value (Pmax; Emax).

4. Device according to one of the preceding claims, **characterized in that** at least one electric output variable (R) of a contact detection system (82), which serves to detect impending contact between the sonotrode (10) and anvil (12), is provided as an electric variable.

5. Device according to one of the preceding claims, **characterized in that**, for contact detection (82) between the sonotrode (10) and anvil (12), an electrical voltage (80) is applied.

6. Device according to one of the preceding claims, **characterized in that** the contact detection system (82) detects impending contact of the sonotrode (10) and anvil (12) if a current flows between the sonotrode (10) and anvil (12).

7. Device according to one of the preceding claims, **characterized in that** the adjusting means (50) increases the gap (s) between the sonotrode (10) and anvil (12) if the contact detection system (82) suggests impending contact of the sonotrode (10) and anvil (12).

8. Device according to one of the preceding claims, **characterized in that**, during the course of an initialization, as a function of the output signal of the contact detection system (82), the adjusting means (50) adjusts the sonotrode (10) and anvil (12) relative to one another such that they are arranged parallel to one another.

9. Device according to one of the preceding claims, **characterized in that**, during the course of an initialization, as a function of a change in travel (ΔHr or ΔHl) until contact of the sonotrode (10) and anvil (12) occurs, the adjusting means (50) adjusts the sonotrode (10) and anvil (12) relative to one another by a corrective factor (K).

10. Method for processing a packing material by means of ultrasound, wherein for the purpose of ultrasound sealing of a packing material a gap (s) through which the packing material is guided is formed between a sonotrode (10) and an anvil (12), wherein the gap (s) between the sonotrode (10) and anvil (12) can be adjusted, wherein an input voltage is converted into a suitable output voltage which is converted into mechanical vibrations in order to generate ultrasound vibrations at the sonotrode (10), wherein the gap (s) between the sonotrode (10) and anvil (12) is varied as a function of at least one electric variable (P, E, R) which acts on the sonotrode (10), wherein at least one output variable (P, E) of a generator (70) which converts the input voltage into an output voltage is used as an electric variable.

11. Method according to one of the preceding method claims, **characterized in that** the gap (s) between the sonotrode (10) and anvil (12) is varied if at least the output variable (P, E) of the generator (70) exceeds or undershoots a limit value (Pmin, Pmax; Emin, Emax).

12. Method according to one of the preceding method claims, **characterized in that** the gap (s) between the sonotrode (10) and anvil (12) is increased if the output variable (P, E) of the generator (70) exceeds a limit value (Pmax; Emax).

13. Method according to one of the preceding method claims, **characterized in that** at least one electric output variable (R) of a contact detection system (82), which serves to detect impending contact between the sonotrode (10) and anvil (12), is used as an electric variable.

14. Method according to one of the preceding method claims, **characterized in that**, for contact detection (82) between the sonotrode (10) and anvil (12), an electrical voltage (80) is applied.

15. Method according to one of the preceding method claims, **characterized in that** the contact detection system (82) detects impending contact of the sonotrode (10) and anvil (12) if a current flows between the sonotrode (10) and anvil (12).

16. Method according to one of the preceding method claims, **characterized in that** the gap (s) between the sonotrode (10) and anvil (12) is increased if the contact detection system (82) suggests impending contact of the sonotrode (10) and anvil (12).

17. Method according to one of the preceding method claims, **characterized in that**, during the course of an initialization, as a function of the output signal of the contact detection system (82), the sonotrode (10) and anvil (12) are adjusted relative to one another such that they are arranged parallel to one another.

18. Method according to one of the preceding method claims, **characterized in that**, during the course of an initialization, as a function of a change in travel (ΔHr or ΔHl) until contact of the sonotrode (10) and anvil (12) occurs, the sonotrode (10) and anvil (12) are adjusted relative to one another by a corrective factor (K).

**Revendications**

1. Dispositif d'usinage d'un matériau d'emballage au moyen d'ultrasons, comprenant

   - au moins une sonotrode (10),
   - au moins une enclume (12), un intervalle (s) à travers lequel peut être passé le matériau d'emballage étant formé entre la sonotrode (10) et l'enclume (12) en vue du scellement aux ultrasons d'un matériau d'emballage,
   - au moins un moyen d'ajustement (50) qui ajuste l'intervalle (s) entre la sonotrode (10) et l'enclume (12),
   - au moins un générateur (70) qui convertit une tension d'entrée en une tension de sortie appropriée, laquelle est convertie par un convertisseur (74) en des oscillations mécaniques en vue de générer des oscillations ultrasoniques au niveau de la sonotrode (10),
   - une régulation ou une commande (78) étant présente pour réguler ou commander l'intervalle (s) entre la sonotrode (10) et l'enclume (12) en fonction d'au moins une grandeur électrique (P, E, R), laquelle est au moins une grandeur de sortie (P, E) du générateur (70) et agit sur la sonotrode (10).

**2.** Dispositif selon l'une des revendications précédentes, **caractérisé en ce que** le moyen d'ajustement (50) modifie l'intervalle (s) entre la sonotrode (10) et l'enclume (12) quand au moins la grandeur de sortie (P, E) du générateur (70) devient supérieure ou inférieure à une valeur limite (Pmin, Pmax ; Emin, Emax).

**3.** Dispositif selon l'une des revendications précédentes, **caractérisé en ce que** le moyen d'ajustement (50) augmente l'intervalle (s) entre la sonotrode (10) et l'enclume (12) quand la grandeur de sortie (P, E) du générateur (70) devient supérieure à une valeur limite (Pmax ; Emax).

**4.** Dispositif selon l'une des revendications précédentes, **caractérisé en ce que** la grandeur électrique prévue est au moins une grandeur de sortie (R) électrique d'un système de détection de contact (82) qui sert à détecter un contact prochain de la sonotrode (10) et de l'enclume (12).

**5.** Dispositif selon l'une des revendications précédentes, **caractérisé en ce qu'**une tension électrique (80) est appliquée entre la sonotrode (10) et l'enclume (12) en vue de la détection de contact (82).

**6.** Dispositif selon l'une des revendications précédentes, **caractérisé en ce que** le système de détection de contact (82) détecte un contact prochain de la sonotrode (10) et de l'enclume (12) lorsqu'un courant circule entre la sonotrode (10) et l'enclume (12).

**7.** Dispositif selon l'une des revendications précédentes, **caractérisé en ce que** le moyen d'ajustement (50) agrandit l'intervalle (s) entre la sonotrode (10) et l'enclume (12) quand le système de détection de contact (82) permet de déduire un contact prochain de la sonotrode (10) et de l'enclume (12).

**8.** Dispositif selon l'une des revendications précédentes, **caractérisé en ce que** dans le cadre d'une initialisation, en fonction du signal de sortie du système de détection de contact (82), le moyen d'ajustement (50) ajuste la sonotrode (10) ou l'enclume (12) l'une par rapport à l'autre de telle sorte que celles-ci sont disposées parallèlement l'une à l'autre.

**9.** Dispositif selon l'une des revendications précédentes, **caractérisé en ce que** dans le cadre d'une initialisation, en fonction d'une modification de la course ($\Delta$Hr ou $\Delta$Hl) jusqu'à un contact de la sonotrode (10) et de l'enclume (12), le moyen d'ajustement (50) ajuste la sonotrode (10) ou l'enclume (12) l'une par rapport à l'autre en fonction d'un facteur de correction (K).

**10.** Procédé d'usinage d'un matériau d'emballage au moyen d'ultrasons, un intervalle (s) à travers lequel passe un matériau d'emballage étant formé entre une sonotrode (10) et une enclume (12) en vue du scellement aux ultrasons d'un matériau d'emballage, l'intervalle (s) entre la sonotrode (10) et l'enclume (12) pouvant être ajusté, une tension d'entrée étant convertie en une tension de sortie appropriée, laquelle est convertie en des oscillations mécaniques en vue de générer des oscillations ultrasoniques au niveau de la sonotrode (10), l'intervalle (s) entre la sonotrode (10) et l'enclume (12) étant modifié en fonction d'au moins une grandeur électrique (P, E, R), laquelle agit sur la sonotrode (10), la grandeur électrique utilisée étant au moins une grandeur de sortie (P, E) d'un générateur (70) qui convertit la tension d'entrée en une tension de sortie.

**11.** Procédé selon l'une des revendications précédentes, **caractérisé en ce que** l'intervalle (s) entre la sonotrode (10) et l'enclume (12) est modifié quand au moins la grandeur de sortie (P, E) du générateur (70) devient supérieure ou inférieure à une valeur limite (Pmin, Pmax ; Emin, Emax).

**12.** Procédé selon l'une des revendications précédentes, **caractérisé en ce que** l'intervalle (s) entre la sonotrode (10) et l'enclume (12) est augmenté quand la grandeur de sortie (P, E) du générateur (70) devient supérieure à une valeur limite (Pmax ; Emax).

**13.** Procédé selon l'une des revendications précédentes, **caractérisé en ce que** la grandeur électrique utilisée est au moins une grandeur de sortie (R) électrique d'un système de détection de contact (82) qui sert à détecter un contact prochain de la sonotrode (10) et de l'enclume (12).

**14.** Procédé selon l'une des revendications précédentes, **caractérisé en ce qu'**une tension électrique (80) est appliquée entre la sonotrode (10) et l'enclume (12) en vue de la détection de contact (82).

**15.** Procédé selon l'une des revendications précédentes, **caractérisé en ce que** le système de détection de contact (82) détecte un contact prochain de la sonotrode (10) et de l'enclume (12) lorsqu'un courant circule entre la sonotrode (10) et l'enclume (12).

**16.** Procédé selon l'une des revendications précédentes, **caractérisé en ce que** l'intervalle (s) entre la sonotrode (10) et l'enclume (12) est agrandi quand le système de détection de contact (82) permet de déduire un contact prochain de la sonotrode (10) et de l'enclume (12).

**17.** Procédé selon l'une des revendications précédentes, **caractérisé en ce que** dans le cadre d'une initialisation, en fonction du signal de sortie du système de détection de contact (82), la sonotrode (10) ou l'enclume (12) sont ajustées l'une par rapport à l'autre de telle sorte que celles-ci sont disposées parallèlement l'une à l'autre.

**18.** Procédé selon l'une des revendications précédentes, **caractérisé en ce que** dans le cadre d'une initialisation, en fonction d'une modification de la course (ΔHr ou ΔHl) jusqu'à un contact de la sonotrode (10) et de l'enclume (12), la sonotrode (10) ou l'enclume (12) sont ajustées l'une par rapport à l'autre en fonction d'un facteur de correction (K).

**Fig. 1**

Fig. 2

EP 2 416 941 B1

**Fig. 3**

**Fig. 4**

Fig. 5

**Fig. 6**

14

20

56

18

48

54

52

50

49

16

51

**Fig. 7**

14

20

56

48

58

49

18

16

51

**Fig. 8**

14

20

56

60

48

49

18

16

51

# Fig. 9

```
                    ┌─────────────┐  ⟍101
                    │    Start    │
                    └──────┬──────┘
                           │
        ┌──────────────────┴──────────────────┐  ⟍102
        │      Fahren der Siegelwalzen         │
        │          in Siegelposition           │
        └──────────────────┬──────────────────┘
                           │
        ┌──────────────────┴──────────────────┐  ⟍103
        │   Paralleles Absenken beider Seiten  │
        │             bis Kontakt              │
        │  Spaltmaß um △ ha = 1 mm vergrößern  │
        └──────────────────┬──────────────────┘
                           │
        ┌──────────────────┴──────────────────┐  ⟍104
        │Rechte Seite absenken bis Kontakt ⇨△Hr│
        │      rechte Seite um △ Hr anheben     │
        └──────────────────┬──────────────────┘
                           │
        ┌──────────────────┴──────────────────┐  ⟍105
        │ Linke Seite absenken bis Kontakt ⇨△ Hi│
        │      linke Seite um △Hi anheben       │
        └──────────────────┬──────────────────┘
```

$$K = ( \triangle Hr - \triangle Hi) * ( B + b ) / 2b$$

$$K = ( \triangle Hi - \triangle Hr ) * ( B + b ) / 2b$$

Entscheidung 106: $\triangle Hr = \triangle Hi$ — nein

Entscheidung 107: $\triangle Hr > \triangle Hi$ — ja / nein

108 — Rechte Seite um K absenken — 109

111 — Linke Seite um K absenken — 112

110 — Absenken beider Seiten bis Kontakt
beide Seiten parallel auf Schneid- bzw. Schweißspalt anheben

ja

113 — Stop

EP 2 416 941 B1

# Fig. 10

203

201

Start

202

Umgebungseinflüsse
Verstelleinrichtung
Umgebungstemperatur
Siegelwalzentemperatur

Initialisierung

205

Spaltmaß

204

N = 0

206

Stollen sind zusammen
( Siegelzeitpunkt )

208

207

Berührung der
Siegelwalzen

ja

Spalt ( s ) vergrößern

nein

nein

209

N = N + 1

210

N = m + 1

ja

211

Leistung Pist aus
Generatorregelung

215

212

Spalt ( s ) verkleinern

nein

Pmin < Pist

ja

213

ja

Pist < Pmax

214

nein

Spalt ( s ) vergrößern

18

Fig. 11

EP 2 416 941 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19753740 C1
- US 6547903 B1
- US 20060144904 A1